(19) Europäisches Patentamt

European Patent Office

Office européen des brevets

(11) Publication number: **0 209 965 B1**

(12) **EUROPEAN PATENT SPECIFICATION**

(45) Date of publication of patent specification: **26.02.92**　(51) Int. Cl.⁵: **F16K 1/02**

(21) Application number: **86303318.9**

(22) Date of filing: **01.05.86**

(54) **Metering valve.**

(30) Priority: **01.05.85 US 729285**
**14.02.86 US 829208**

(43) Date of publication of application:
**28.01.87 Bulletin 87/05**

(45) Publication of the grant of the patent:
**26.02.92 Bulletin 92/09**

(84) Designated Contracting States:
**BE DE FR GB NL**

(56) References cited:
**GB-A- 2 109 089**
**US-A- 3 240 230**
**US-A- 3 511 470**
**US-A- 3 538 951**

(73) Proprietor: **NUPRO COMPANY**
**4800 East 345 Street**
**Willoughby Ohio 44094(US)**

(72) Inventor: **Simonelli, James Kenneth**
**8083 Bellflower Road**
**Mentor Ohio 44060(US)**
Inventor: **Scheffel, Gary William**
**8384 State RT 43**
**Streetsboro, Ohio 44240(US)**
Inventor: **Jagielo, Joseph James**
**7428 Avon Drive**
**Mentor, Ohio 44060(US)**

(74) Representative: **Jones, Colin et al**
**W.P. THOMPSON & CO. Coopers Building**
**Church Street**
**Liverpool L1 3AB(GB)**

## Description

The invention relates to valves and, more particularly, to a metering valve having improved stability.

The invention is particularly suited for use in a needle type metering valve of the type used for controlling fine flows and will be described with particular reference thereto. However, the invention described herein is capable of broader applications and use.

Valves used for metering fine flows typically comprise a needle member or metering pin carried at the end of a stem and adapted to enter a fluid flow orifice in a valve body between the fluid inlet and outlet. Generally, the stem is screw-threadedly received in a multi-part bonnet member which, in turn, is screw-threadedly secured to the body. Rotation of an associated handle imparts axial movement to the stem and the needle member, and regulates fluid flow through the valve. An O-ring or the like is carried on the stem and assists a conventional stem packing for sealing purposes.

In recent years, a quality control study has determined that metering valves of this general type have been failing prematurely due to breakage and galling of the metering pin. It is desirable to extend the cycle life of the metering valves and retain high quality metering after repetitive use. A review of the valve designs found that improvements were obtainable in certain areas, e.g., better alignment of the metering pin in relation to the orifice, reduction of tolerance stacking, better force absorption, and the like. The variation in concentricity and tolerance stacking allowed the metering pin to rub the orifice side wall. This caused the metering pins to break or gall since the resulting forces could not be absorbed by the stem and bonnet assemblies.

Flow instability problems also resulted at low pressure ranges. Variations in flow were not uncommon upon imposition of slight lateral loads on the handle. These flow variations are particularly undesirable when handling toxic or corrosive fluids where a highly accurate, precise flow is required.

A valve arrangement has, therefore, been considered desirable which would provide improved valve life and overcome the foregoing problems.

An object of the invention is to meet these needs and others, and to provide a new and improved metering valve construction.

US-A-3538951 discloses a metering valve of the kind comprising a body having inlet and outlet passageways and an orifice interposed between said inlet and outlet passageways; a stem having a metering pin extending coaxially from the inner end thereof into said orifice; a unitary bonnet secured to said body and having said stem screw-threadedly connected thereto, selective rotation of said stem causing axial shifting of said metering pin relative to said orifice for regulating fluid flow from said inlet passageway to said outlet passageway; and a pair of resilient and axially spaced-apart O-rings on said stem.

According to the present invention, a metering valve of the above-mentioned kind is characterised in that both said resilient O-rings are interposed between said stem and a passage in said unitary bonnet and allow said stem to float in said bonnet passage so that the O-rings absorb forces caused by said metering pin contacting the side wall of said orifice, and in that the O-ring spaced on said stem further from the metering pin is subjected to substantially greater compression than the other.

A handle is advantageously positioned at an outer end of the stem. The handle receives an upper portion of the valve bonnet therein.

In one embodiment, means for limiting lateral movement of the valve stem is defined between the handle and an exterior surface of the upper portion of the valve bonnet.

In accordance with another aspect of the invention, a guide means is advantageously provided at one end of the bonnet for ensuring accurate alignment of the bonnet on the valve body which, in turn, ensures proper alignment of the metering pin in the orifice. Advantageously, a seal member is situated between the exterior of the guide means and the valve body.

According to another aspect of the invention, the lateral movement limiting means preferably comprises a packing assembly including an annular polymeric packing, such as polytetrafluoroethylene, and a packing gland. The packing assembly is axially and radially compressed between the handle and the exterior surface of the upper portion of the valve bonnet.

In accordance with a still further aspect of the invention, means for adjusting the compression of the packing assembly is advantageously provided. The packing gland is cup-shaped and has a base portion which is engaged by a pair of adjustable set screws.

A principal advantage of the present invention is the provision of a metering valve which achieves better, more reliable concentricity between the metering pin and an associated orifice.

Another advantage of the invention resides in a structural arrangement which better protects the metering pin from various contact forces.

A further advantage of the invention is found in providing the bonnet with a guide means extension to facilitate centering of the metering pin in the orifice.

Another advantage of the invention resides in a structural arrangement that limits lateral movement of the handle relative to the valve stem.

A further advantage of the invention is the provision of adjusting means to alter the compression characteristics of the packing assembly without affecting a preset deadstop position of the valve.

The invention will be further described, by way of example, with reference to the accompanying drawings; wherein:

Fig.1 is an elevational view of a metering valve;

Fig.2 is an enlarged cross-sectional view of the metering valve of Fig.1, showing the co-operative relationship of the various components according to the invention;

Fig.3 is an enlarged, exploded cross-sectional view showing the lower portions of the stem and bonnet, and the upper portion of the valve body formed in accordance with the invention;

Fig.4 is an enlarged cross-sectional view of the upper portion of the metering valve showing a modified handle construction;

Fig.5 is an enlarged cross-sectional view of another alternative handle construction; and

Fig.6 is a plan view in partial cross-section of the alternative handle construction of Fig.5.

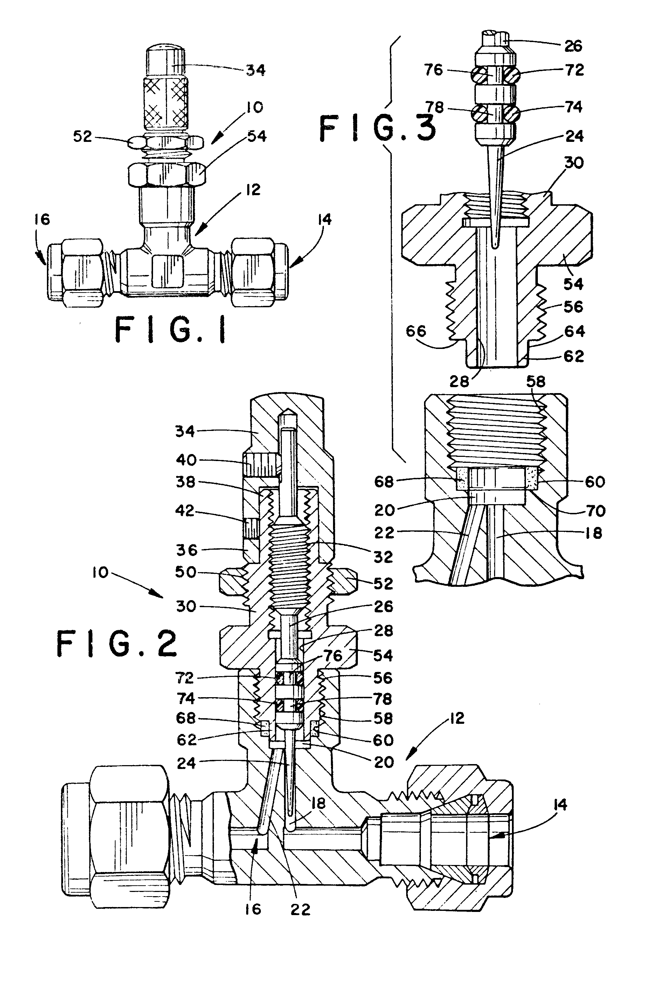

Referring now to the drawings, Figs. 1 and 2 show a metering valve 10 including a body 12 having an inlet passageway 14 and an outlet passageway 16. As shown, the inlet and outlet are in opposed axial alignment with each other. Swage type end fittings are received on the valve body in surrounding relation to the outer end areas of passageways 14, 16 to facilitate ready installation of the valve in an associated fluid system. However, a variety of other end fitting connections could also be suitably employed.

An elongated orifice 18 extends generally normal to inlet and outlet passageways 14, 16 and has the opposed ends thereof in fluid communication with the inlet passageway and an enlarged guide bore 20. The outlet 16 also communicates with bore 20 by means of an angled passage 22. Fluid may thus flow through inlet 14, orifice 18, bore 20, and exit via passage 22 and outlet 16.

Fluid flow through the valve is controlled by a small, delicate, tapered metering pin or needle 24 carried at the lower end of an elongated stem 26. Axial movement of the stem 26 moves the tapered metering pin axially into and out of the orifice 18, thereby varying the annular flow area between the metering pin and orifice as is known in the valve art.

Stem 26 is screw-threadedly engaged in a central bore or passage 28 of a unitary or one-piece bonnet 30 at mating screw-threaded areas 32 located remote from the tapered metering pin 24. The stem extends outwardly from the outer end of the bonnet and receives a generally cylindrical adjusting handle 34. Handle 34 has a downwardly extending, open cylindrical boot or skirt portion 36 which encloses an outer portion 38 of the bonnet. The adjusting handle is non-rotatably connected to the stem by convenient means, such as a set screw 40. Manual rotation of the handle thus imparts rotary movement to the stem for axially shifting metering pin 24 in orifice 18 for adjusting the rate of fluid flow through the valve.

A second set screw 42 is provided in the boot portion 36 of the handle. Advancement of this second set screw locks the handle and stem in a predetermined position, thereby maintaining fluid flow through the valve at a constant rate. Loosening the set screw 42 allows variable flow metering by adjusting the handle.

Although not critical to the invention, bonnet 30 has an exteriorly screw-threaded portion 50 for receiving a panel mounting nut 52. This provides for secure mounting of the valve as is known in the art. Located adjacent to threads 50 is a radially outwardly extending polygonal flange 54 defining wrench flats which facilitate removal of the bonnet from the valve body 12.

Referring also to Fig.3, the lower end of the bonnet is provided with external screw threads 56 co-operable with an enlarged, threaded counterbore 58 extending into the valve body 12 coaxially with bore 20. In addition, bore 58 has an unthreaded section 60 disposed axially adjacent bore 20.

Projecting axially outwardly from the nose end of the bonnet 30 is a cylindrical guide means 62. The outer surface 64 of guide means 62 is smoothly finished, and is spaced radially inward of threaded area 56 for closely received, aligning engagement with bore 20, as shown in Fig.2. A seal-confining shoulder 66 is defined between threaded area 56 and outer surface 64.

An annular body seal 68 is closely interposed between the outer surface 64 of the guide means and the side wall of bore 60 in valve body 12. As seen in Figs. 2 and 3, the body seal 68 rests on a radial shoulder 70 defined at the interface between bores 60 and 20. Seal 68 functions to provide a fluid tight seal between the body and bonnet when these components are placed in a fully assembled relationship. As the bonnet is threaded into bore 58, shoulders 66, 70 axially compress the body seal so that it radially expands to form a fluid tight seal between outer surface 64 and the side wall of bore 60.

Stem 26 is provided with a pair of axially spaced O-rings 72, 74 received in corresponding grooves 76, 78 in the stem. The O-rings enable the stem to float. Thus, should metering pin 24 come into contact with the side wall of orifice 18, the force of such contact is appropriately dissipated, and concentric alignment between the metering pin and orifice is retained. Such ability greatly decreases the chances of galling or breaking of the metering pin. In addition, the pair of O-rings prevents system fluid bypass between the stem and the bonnet, and eliminates the need for additional stem packing structure.

The upper O-ring 72 is squeezed or compressed more tightly than lower O-ring 74. In fact, O-ring 72 is compressed in the absence of fluid pressure to an extent which is greater than that recommended by the O-ring manufacturer for normal use. In the preferred embodiment here being described, O-ring 72 experiences a compression which is approximately twice the recommended compression. Such compression may readily be achieved by proper selection of the O-ring and proper dimensioning of groove 76.

To assemble the valve, stem 26 is threaded into the bonnet. The threaded engagement at area 32 provides a secure mounted relationship between the stem and bonnet. The unitary or one-piece bonnet 30 is then threaded into the valve body 12. External threads 56 interact with threaded bore 58 to retain the bonnet within the valve body. The use of a one-piece bonnet eliminates undesirable tolerance stacking between these two mating parts.

By way of example, prior art devices use a two-piece bonnet to facilitate assembly of the valve. The first bonnet piece is threaded into engagement with the second bonnet piece. Because of this construction, there are some dimensional deviations in the bonnet component due to acceptable tolerances within the individual pieces. When the composite bonnet is, in turn, threaded into engagement with an associated valve body, still other dimensional deviations will occur. The combination of these deviations results in an assembly with greater overall tolerance problems, i.e., tolerance stacking. Use of the one-piece bonnet advantageously decreases the foregoing tolerance stacking situation.

Also, centering of the stem with metering pin 24 coaxially disposed in orifice 18 occurs on guide means 62, and not on bonnet threads 56 as had heretofore been the case. Guide means 62 extends into close guiding contact with bore 20 for ensuring alignment of the metering pin 24 in the orifice. Reliance is not made solely on the threaded interconnection between the bonnet and the valve body for effective centering of the metering pin. Body seal 68 is compressed between the smooth outer face 64 of the guide means and bore portion 60. Shoulder area 66 axially compresses and causes radial expansion of body seal 68 into a tight sealing condition when the bonnet is threadedly mounted on the valve body.

Handle 34 is then located over the outer end of stem 26 and the outer portion 38 of the bonnet. Set screw 40 is advanced into retaining contact with the stem so that subsequent rotation of the handle effects rotation of the stem with corrsponding axial movement. Such axial movement effects adjustment of metering pin 24 in orifice 18 for controlling fluid flow through the valve. Set screw 42 is also inserted in the boot portion 36 of the handle for selective locking of the handle to the outer portion 38 of the bonnet 30.

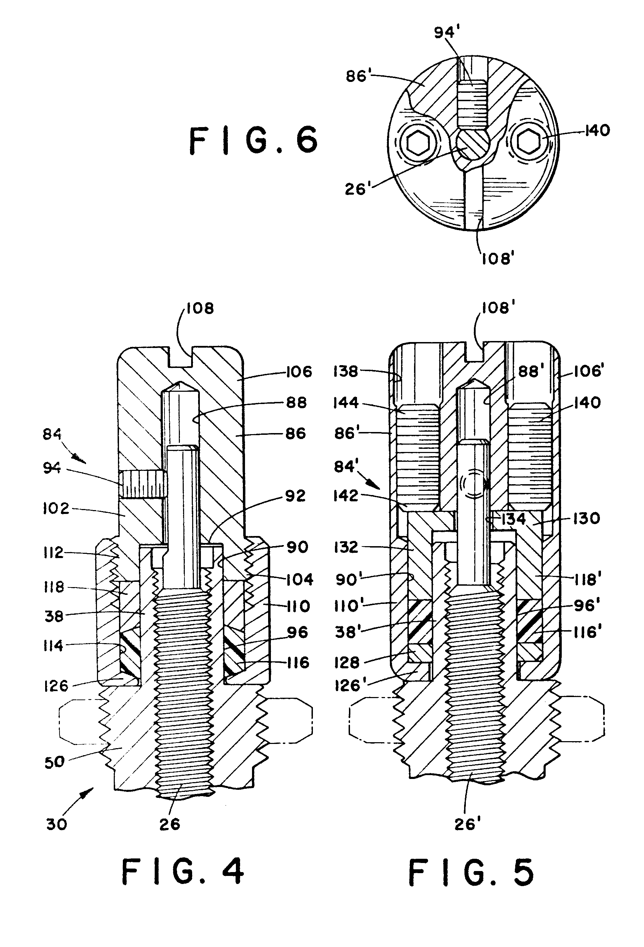

With reference to Fig.4, a modified or alternative handle assembly 84 is shown. For ease of illustration, the elements of this modified handle assembly are identified by new numerals while the valve bonnet and stem are identified by their previous numerals. In this particular embodiment, the handle assembly 84 includes a handle 86 having a first bore 88 and a concentric counterbore 90 defining a radial shoulder 92 therebetween. The stem 26 is closely received in the bore 88, and conventional means, such as set screw 94, maintains the handle and valve stem in non-rotatable, interconnection. The counterbore 90 is adapted to closely receive an exterior surface 96 of outer portion 38 of the bonnet 30.

A first or inner end 102 of the handle includes an exteriorly screw-threaded portion 104, while a second or outer end 106 has a recess 108 adapted to receive the end of an appropriate, conventional tool for selectively rotating the handle. Typically, the metering valve is mounted in a generally inaccessible area such that recess 108 enables valve adjustment through use of a conventional handtool, such as a screwdriver.

In the Fig.4 embodiment, the handle includes a handle extension 110 having an interior threaded portion 112 operatively engaging threaded portion 104. The handle assembly 84 is shown in the closed position wherein the handle extension 110 engages a shoulder on the bonnet 30 between the outer portion 38 and the threaded portion 50. The handle extension 110 is generally cylindrical having an inner surface 114 spaced radially from exterior surface 96 of the outer portion 38 of the bonnet. An annular polymeric packing 116, preferably polytetrafluoroethylene, is disposed between the outer portion 38 and the handle extension 110. Likewise, an annular packing gland 118 is disposed between the handle extension 110 and valve bonnet 30. The packing 116 is engaged at one end by an inwardly extending flange 126 of the handle extension 110 and at the other end by packing gland 118. The inwardly extending flange 126 may be preformed, or simply crimped to its radially inward configuration. The packing gland 118 is interposed between the packing 116 and the inner end 102 of the handle.

The screw-threaded engagement between the handle 86 and the handle extension 110 places the packing gland and packing in axial and radial compression. Thus, a predetermined threaded advancement of handle 86 in extension 110 causes radial expansion of packing 116, through gland 118, into close engagement with the inner surface of the handle extension and the exterior surface of the outer portion 38 of the bonnet. Imposition of lateral loads on the handle assembly 84 is thereby dissipated due to the packing 116. This prevents transfer of forces to the valve stem which, in turn, advantageosuly reduces flow instability problems.

Turning to Figs. 5 and 6, an alternative handle modification incorporates an adjustability feature. For ease of illustration, like elements are identified by like numerals with a primed (') suffix and new elements are identified by new numerals. A handle assembly 84' includes a handle 86' having a first bore 88' and a counterbore 90' therein. Tile first bore 88' closely receives an upper portion of stem 26' in non-rotatable relation. A set screw 94' or similar means maintains the handle in fixed, non-rotatable relation with the valve stem. The counterbore 90' receives the outer portion 38' of the bonnet, polymeric packing 116', and packing gland 118', therein. In additon, washer 128 is received in the counterbore in abutting engagement with an inwardly extending flange 126'.

In this alternative embodiment, the handle extension 110' is integrally formed with the handle 86' so that the inner surface of the handle extension coincides with the counterbore 90'. The annular washer 128 and polymeric packing 116' are positioned between the handle extension 110' and exterior surface 96' of the outer portion 38'. The packing gland 118' is generally cup-shaped, having a base portion 130 with an annular sidewall portion 132 extending therefrom. The base portion has an aperture 134 coaxial with first bore 88' to receive the valve stem therethrough. Additionally, a recess 108' is formed in an outer end 106' of the handle for selective co-operation with the end of an appropriate tool.

Means for adjusting the compression of the polymeric packing 116', packing gland 118', and washer 128 in the handle extension is provided in the outer end 106' of the handle. More particularly, a pair of axially extending threaded apertures 138 is arranged diametrically in the handle to be on opposite sides of bore 88' and thus of stem 26'. A pair of elongated screw-threaded members 140 is threadedly received in threaded apertures 138 for abutting engagement with the base portion 130 of the packing gland. A first or inner end 142 abuts the base portion while a second or outer end 144 is designed for receipt of an appropriate, conventional tool or wrench.

Rotation of the handle 86' causes rotational and axial movement of the valve stem relative to the valve bonnet. The polymeric packing 116' slides along the exterior surface 96' of the bonnet, dissipating any loads imposed laterally on the handle. This, in turn, prevents transmission of lateral forces to the upper portion of the valve stem 26'.

The polymeric packing has a tendency to cold flow after continued use so that the effectiveness in limiting the lateral movement of the valve stem is reduced. In that event, an operator need only rotate the elongated threaded members 140 in their respective apertures 138 for producing increased axial and radial compression of packing 116'. Adjusting the compression of the packing only affects the arrangement of the handle assembly 84'. The dead stop position of the valve member, which is preset at the factory, is not affected or altered by adjusting the handle packing.

Referring again to Figs. 1 to 3, inadvertent contact of the metering pin 24 with the sidewall of the orifice 18 generates forces which, necessarily, pass through the delicate metering pin. As alluded to above, breakage of the pin, or at least galling thereof, was the usual result. With the present invention these deficiencies are eliminated, or at least substantially reduced.

Compression of the outermost O-ring 72 is significantly above, approximately twice, the manufacturer's recommendation in order to provide a more stable structure. Thus, the double O-rings 72, 74 (Figs. 1 to 3), and the modified handle assemblies 84 (Fig.4), 84' (Figs. 5 and 6), allow the stem to float, retain a stable valve structure, and prevent fluid leakage between the stem and bonnet.

In the preferred embodiment, the bonnet, valve handle, and panel nut body are constructed of stainless steel. The stem is also constructed of stainless steel but preferably of a different grade. The body seal and O-rings are of a resilient material with VITON (Trademark of E. I. DuPont de Nemours & Co.), having been used with success. A wide range of other materials say be used advantageously to accommodate a variety of valve applications and environments.

Comparative tests have established that increased stability is realized with the metering valve designs of the present invention. In addition, use of a pair of O-rings eliminates the need for a stem packing that normally is disposed in the valve bonnet. This, in turn, dispenses with any packing adjustment which would necessitate valve disassembly. The modified handle assembly limits lateral movement of the stem and provides a simplified packing that may be adjusted without disassembly of the valve. The prior art type of stem packing was a source of still other problems. The delicate metering pin was unable to deform the stiff packing material when misalignment was present.

The addition of a second O-ring in the present invention retains a double stem seal and provides a smooth, stable stroke. Moreover, stem damage due to misalignment which is prevalent in the prior art assemblies is greatly reduced. The several O-rings allow the stem to float while providing a stabilizing effect of the valve. This results in a longer cycle life for the valve, as well as the use of fewer component parts. The various tests directed to flow range, stability, and cycle life of the valves of the invention indicate a more linear response between the flow range and the valve turns of the handle. Better low end metering is also obtained in addition to a lower dead stop setting and a more consistent number of turns at full open.

The alternative handle assemblies facilitate actuation even if the valve is positioned in a generally inaccessible area. An appropriate tool end can be used to adjust remotely the flow rate along with the handle packing from an outer end of the metering valve. Adjusting the handle packing has no effect on the preset dead stop setting of the new valve design.

## Claims

1. A metering valve comprising a body (12) having inlet and outlet passageways (14,16) and an orifice (18) interposed between said inlet and outlet passageways; a stem (26) having a metering pin (24) extending coaxially from the inner end thereof into said orifice (18); a unitary bonnet (30) secured to said body (12) and having said stem (26) screw-threadedly connected thereto, selective rotation of said stem (26) causing axial shifting of said metering pin (24) relative to said orifice (18) for regulating fluid flow from said inlet passageway (14) to said outlet passageway (16); and a pair of resilient and axially spaced-apart O-rings (72,74) on said stem (26); characterised in that both said resilient O-rings (72,74) are interposed between said stem (26) and a passage (28) in said unitary bonnet (30) and allow said stem (26) to float in said bonnet passage (28) so that the O-rings absorb forces caused by said metering pin contacting the side wall of said orifice, and in that the O-ring (72) spaced on said stem (26) further from the metering pin (24) is subjected to substantially greater compression than the other (74).

2. A metering valve according to claim 1, wherein the O-ring (72) spaced on said stem further from said metering pin (24) is compressed approximately twice as much as the other O-ring (74).

3. A metering valve according to claim 1 or 2, wherein said O-rings (72,74) are received on the exterior of said stem (26) in engagement with a wall of a passage (28) through said bonnet (30) for allowing said stem (26) to float in said bonnet passage (28).

4. A metering valve according to any preceding claim wherein a guide means (62) on said bonnet (30) co-operates with said body (12) for substantially coaxially locating said metering pin (24) in said orifice (18).

5. A metering valve according to claim 4, wherein said body (12) has a guide bore (20) coaxial with said orifice (18) and a counterbore (58) coaxial with and of greater diameter than said guide bore (20), and said bonnet (30) is screw-threadedly received in said counterbore (58) and wherein said guide means (62) is smooth cylindrical and is received in said guide bore (20).

6. A metering valve according to claim 5, wherein a first shoulder (66) on said bonnet (30) extends radially outward from said guide means (62), and said body has a second bore (60) coaxial with the first-mentioned bore (20) and connected thereto by a second shoulder (70).

7. A metering valve according to claim 4, 5 or 6 wherein a body seal (68) is interposed between said guide means (62) and said body (12).

8. A metering valve according to claims 6 and 7, wherein said body seal (68) is axially interposed between said shoulders (66,70) and radially interposed between said guide means (62) and said second bore (60).

9. A metering valve according to any of claims 1 to 8, wherein said metering pin (24) has a tapered configuration substantially over the length thereof from adjacent said stem.

10. A metering valve according to any preceding claim, wherein a handle (34) is received over an upper portion of said bonnet (30) and non-rotatably received on an outer end of said stem (26) with selective rotation of said handle causing rotation of said stem (26) and means (116) are disposed along an exterior surface of said bonnet (30) and cooperate with the handle (34) for limiting lateral movement of the outer end of said stem (26) relative to the upper portion of said bonnet (30).

**11.** A metering valve according to claims 10, wherein said handle (86) has an extension sleeve (110) extending axially outwardly from one end thereof, said extension sleeve receiving the upper portion of the bonnet (30) and the limiting means (116) therein.

**12.** A metering valve according to claim 11, wherein said limiting means includes a polymeric packing (116) and a packing gland (118) disposed along an exterior surface of said upper portion of the bonnet (30).

**13.** A metering valve according to claim 11 or 12, wherein said extension sleeve (110) has a radially inwardly extending flange (126) at one end for retaining said limiting means (116) therein.

**14.** A metering valve according to claim 11, wherein said extension sleeve (110') is integral with said handle (86') add has a radially inwardly extending crimped end (126') for retaining said limiting means therein.

**15.** A metering valve according to claim 11 or 14, wherein said limiting means includes an annular packing (116') and a generally cup-shaped packing gland (118') compressibly interposed between said handle (86') add a radially inwardly extending flange (126') at one and of said extension sleeve.

**16.** A metering valve according to claim 15, further including means (140) for adjusting the compression of said packing and packing gland.

**17.** A metering valve according to claim 16, wherein said adjusting means includes a screw-threaded member (140) operatively engaged with said handle (86') and in abutting relation with said cup-shaped packing gland (118'), whereby rotation of said threaded member (140) relative to said handle axially compresses and radially expands said packing (116').

**Revendications**

**1.** Soupape de dosage comprenant un corps (12) muni de passages d'entrée et de sortie (14, 16) et d'un orifice (18) interposé entre ces passages d'entrée et de sortie; une tige (26) munie d'une pointe de dosage (24) partant coaxialement de son extrémité intérieure pour pénétrer dans l'orifice (18); un chapeau d'une seule pièce (30) fixé au corps (12) et dans lequel vient se visser la tige (26), la rotation sélective de la tige (26) provoquant le déplacement axial de la pointe de dosage (24) par rapport à l'orifice (18) pour réguler le débit de fluide entre le passage d'entrée (14) et le passage de sortie (16); et une paire de joints toriques élastiques (72, 74) espacés axialement sur la tige (26); soupape de dosage caractérisée en ce que les deux joints toriques élastiques (72, 74) sont interposés entre la tige (26) et un passage (28) ménagé dans le chapeau d'une seule pièce (30) pour permettre à la tige (26) de flotter dans le passage (28) du chapeau de façon que les joints toriques absorbent les forces produites par le contact de la pointe de dosage contre la paroi latérale de l'orifice, et en ce que le joint torique (72) le plus écarté de la pointe de dosage (24) sur la tige (26) est soumis à une compression nettement plus grande que l'autre joint torique (74).

**2.** Soupape de dosage selon la revendication 1, caractérisée en ce que le joint torique (72) le plus écarté de la pointe de dosage (24) sur la tige est comprimé d'environ le double de la compression de l'autre joint torique (74).

**3.** Soupape de dosage selon l'une quelconque des revendications 1 et 2, caractérisée en ce que les joints toriques (72, 74) sont logés sur l'extérieur de la tige (26) de manière à venir en contact avec une paroi d'un passage (28) traversant le chapeau (30), pour permettre à la tige (26) de flotter dans ce passage (28) du chapeau.

**4.** Soupape de dosage selon l'une quelconque des revendications précédentes, caractérisée en ce qu'un moyen de guidage (62) formé sur le chapeau (30) coopère avec le corps (12) pour positionner la pointe de dosage (24) de façon sensiblement coaxiale dans l'orifice (18).

**5.** Soupape de dosage selon la revendication 4, caractérisée en ce que le corps (12) comporte un trou de guidage (20) coaxial à l'orifice (18) et un contre-trou (58) coaxial avec le trou de guidage (20) et de plus grand diamètre que celui-ci, en ce que le chapeau (30) est vissé dans le contre-trou (58), et en ce que le moyen de guidage (62) est cylindrique et lisse, ce moyen de guidage étant logé dans le trou de guidage (20).

**6.** Soupape de dosage selon la revendication 5, caractérisée en ce qu'un premier épaulement (66) formé sur le chapeau (30) fait saillie radialement vers l'extérieur par rapport au moyen de guidage (62), et en ce que le corps comporte un second trou (60) coaxial au premier trou (20) ci-dessus et relié à celui-ci par un second épaulement (70).

7. Soupape de dosage selon l'une quelconque des revendications 4 à 6, caractérisée en ce qu'un joint d'étanchéité de corps (68) est interposé entre le moyen de guidage (62) et le corps (12).

8. Soupape de dosage selon l'une quelconque des revendications 6 et 7, caractérisée en ce que le joint d'étanchéité de corps (68) est interposé axialement entre les épaulements (66, 70) et interposé radialement entre le moyen de guidage (62) et le second trou (60).

9. Soupape de dosage selon l'une quelconque des revendications 1 à 8, caractérisée en ce que la pointe de dosage (24) présente une configuration conique sur sensiblement toute sa longueur à partir du voisinage de la tige.

10. Soupape de dosage selon l'une quelconque des revendications précédentes, caractérisée en ce qu'un bouton (34) est monté sur une partie supérieure du chapeau (30) et vient se loger sans pouvoir tourner sur une extrémité extérieure de la tige (26) de façon qu'une rotation sélective du bouton provoque une rotation de la tige (26), et en ce que des moyens (116) sont disposés le long d'une surface extérieure du chapeau (30) et coopèrent avec le bouton (34) pour limiter le mouvement latéral de l'extrémité extérieure de la tige (26) par rapport à la partie supérieure du chapeau (30).

11. Soupape de dosage selon la revendication 10, caractérisée en ce que le bouton (86) comporte un manchon de prolongement (110) dépassant axialement vers l'extérieur à une extrémité de celle-ci, ce manchon de prolongement recevant à l'intérieur de celui-ci la partie supérieure du chapeau (30) et les moyens de limitation (116).

12. Soupape de dosage selon la revendication 11, caractérisée en ce que les moyens de limitation comprennent une garniture en polymère (116) et une bague de presse-étoupe (118) disposée le long d'une surface extérieure de la partie supérieure du chapeau (30).

13. Soupape de dosage selon l'une quelconque des revendications 11 et 12, caractérisée en ce que le manchon de prolongement (110) comporte, à l'une de ses extrémités, un rebord faisant saillie radialement vers l'intérieur (126) pour retenir les moyens de limitation (116) à l'intérieur de celui-ci.

14. Soupape de dosage selon la revendication 11, caractérisée en ce que le manchon de prolongement (110') est réalisé d'une seule pièce avec le bouton (86') et comporte une extrémité sertie radialement vers l'intérieur (126') pour retenir les moyens de limitation à l'intérieur de celle-ci.

15. Soupape de dosage selon l'une quelconque des revendications 11 et 14, caractérisée en ce que les moyens de limitation comprennent une garniture annulaire (116') et une bague de presse-étoupe en forme générale de coupelle (118') interposée en compression entre le bouton (86') et le rebord faisant saillie radialement vers l'intérieur (126') à une extrémité du manchon de prolongement.

16. Soupape de dosage selon la revendication 15, caractérisée en ce qu'elle comprend en outre des moyens (140) pour régler la compression de la garniture et de la bague de presse-étoupe.

17. Soupape de dosage selon la revendication 16, caractérisée en ce que les moyens de réglage comprennent un élément fileté (140) en forme de coupelle se vissant en fonctionnement dans le bouton (86') et venant buter contre la bague de presse-étoupe (118'), en forme de coupelle et de façon que la rotation de cet élément fileté (140) par rapport à le bouton comprime axialement et dilate radialement la garniture (116').

**Patentansprüche**

1. Dosierventil umfassend einen Körper (12) mit Eingangs- und Ausgangsdurchlässen (14, 16) und einer Drosselbohrung (18), die sich zwischen dem Eingangsdurchlaß und dem Ausgangsdurchlaß befindet; einen Stößel (26) mit einem Meßstift (24), der sich koaxial von dessen innerem Ende in die Drosselbohrung (18) erstreckt; einen einstückigen Ventildeckel (30), der an dem Körper (12) befestigt ist und an welchem der Stößel (26) über ein Schraubgewinde verbunden ist, wobei eine wahlweise Drehung des Stößels (26) eine Axialverschiebung des Meßstiftes (24) relativ zu der Drosselbohrung (18) bewirkt, um den Fluidfluß von dem Eingangsdurchlaß (14) zu dem Ausgangsdurchlaß (16) zu regulieren; und zwei elastische und axial beabstandete O-Ringe (72, 74) an dem Stößel (26); dadurch **gekennzeichnet**, daß beide elastische O-Ringe (72, 74) sich zwischen dem Stößel (26) und einem Durchlaß (28) in dem einstückigen Ventildeckel (30) befinden und ermöglichen, daß der Stößel (26) in dem Durchlaß (28) des einstückigen Ventildeckels schwimmt, so daß die O-Ringe die Kräfte absorbieren, die durch den Kontakt des Meßstiftes mit der Seitenwand des Durchlasses verursacht sind, und daß der an dem Stößel (26) weiter von dem Meßstift (24) beabstandete O-Ring (72) einer wesentlich größeren Komprimierung unterliegt als der andere (74).

2. Dosierventil nach Anspruch 1,
dadurch **gekennzeichnet**, daß der an dem Stößel weiter von dem Meßstift (24) beabstandete O-Ring (72) in etwa doppelt so stark komprimiert wird, wie der andere O-Ring (74).

3. Dosierventil nach Anspruch 1 oder 2,
dadurch **gekennzeichnet**, daß die O-Ringe (72, 74) außen an dem Stößel (26) in Eingriff mit einer Wand eines Durchlasses (28) durch den Ventildeckel (30) aufgenommen sind, um zu ermöglichen, daß der Stößel (26) in dem Ventildeckeldurchlaß (28) schwimmt.

4. Dosierventil nach einem der vorhergehenden Ansprüche,
dadurch **gekennzeichnet**, daß eine Führungseinrichtung (62) an dem Ventildeckel (30) mit dem Körper (12) zusammenwirkt, um den Meßstift (24) in der Drosselbohrung (18) im wesentlichen koaxial anzuordnen.

5. Dosierventil nach Anspruch 4,
dadurch **gekennzeichnet**, daß der Körper (12) eine koaxial zu der Drosselbohrung (18) verlaufende Führungsbohrung (20) sowie eine koaxial mit der Führungsbohrung (20) verlaufende Senkung (58) aufweist, die einen größeren Durchmesser als die Führungsbohrung (20) hat, und daß der Ventildeckel (30) in der Senkung (58) über ein Schraubgewinde aufgenommen ist, wobei die Führungseinrichtung (62) gleichförmig zylindrisch ist und in der Führungsbohrung (20) aufgenommen ist.

6. Dosierventil nach Anspruch 5,
dadurch **gekennzeichnet**, daß sich eine erste Schulter (66) an dem Ventildeckel (30) von der Führungseinrichtung (62) radial nach außen erstreckt, und daß der Körper eine koaxial zu der ersterwähnten Bohrung (20) verlaufende und mit dieser durch eine zweite Schulter (70) verbundene zweite Bohrung (60) aufweist.

7. Dosierventil nach Anspruch 4, 5 oder 6,

dadurch **gekennzeichnet**, daß sich zwischen der Führungseinrichtung (62) und dem Körper (12) eine Körperdichtung (68) befindet.

8. Dosierventil nach den Ansprüchen 6 und 7,
dadurch **gekennzeichnet**, daß sich axial zwischen den Schultern (66, 70) und radial zwischen der Führungseinrichtung (62) und der zweiten Bohrung (60) eine Körperdichtung (68) befindet.

9. Dosierventil nach einem der Ansprüche 1 bis 8,
dadurch **gekennzeichnet**, daß der Meßstift (24) ein konisches Äußeres hat, das sich von dem benachbarten Stößel im wesentlichen über dessen Länge erstreckt.

10. Dosierventil nach einem der vorhergehenden Ansprüche,
dadurch **gekennzeichnet**, daß über einem oberen Abschnitt des Ventildeckels (30) ein Griff (34) aufgenommen ist und nicht drehbar an einem äußeren Ende des Stößels (26) aufgenommen ist, wobei eine wahlweise Drehung des Griffes eine Drehung des Stößels (26) bewirkt, und daß entlang einer Außenfläche des Ventildeckels (30) eine Einrichtung (116) angeordnet ist und mit dem Griff (34) zusammenwirkt, um eine seitliche Bewegung des äußeren Endes des Stößels (26) relativ zu dem oberen Abschnitt des Ventildeckels (30) zu begrenzen.

11. Dosierventil nach Anspruch 10,
dadurch **gekennzeichnet**, daß der Griff (86) eine Verlängerungshülse (110) aufweist, die sich von seinem einen Ende axial nach außen erstreckt, wobei die Verlängerungshülse den oberen Abschnitt des Ventildeckels (30) und die darin befindliche Begrenzungseinrichtung (116) aufnimmt.

12. Dosierventil nach Anspruch 11,
dadurch **gekennzeichnet**, daß die Begrenzungseinrichtung eine Polymerdichtung (116) und eine Stopfbuchsenpackung (118) enthält, die entlang einer Außenfläche des oberen Abschnitts des Ventildeckels (30) angeordnet sind.

13. Dosierventil nach Anspruch 11 oder 12,
dadurch **gekennzeichnet**, daß die Verlängerungshülse (110) an einem Ende einen sich radial nach innen erstreckenden Flansch (126) aufweist, um darin die Begrenzungseinrichtung (116) aufzunehmen.

14. Dosierventil nach Anspruch 11,
dadurch **gekennzeichnet**, daß die Verlängerungshülse (110') einstückig mit dem Griff (86') ausgeführt ist und ein sich radial nach innen erstreckendes, umgebogenes Ende (126') zur Aufnahme der Begrenzungseinrichtung darin aufweist.

15. Dosierventil nach Anspruch 11 oder 14
dadurch **gekennzeichnet**, daß die Begrenzungseinrichtung eine Ringdichtung (116') und eine grundsätzlich becherförmige Stopfbuchsenpackung (118') aufweist, die zusammendrückbar zwischen dem Griff (86') und einem sich radial nach innen erstreckenden Flansch (126') an einem Ende der Verlängerungshülse aufgenommen sind.

16. Dosierventil nach Anspruch 15,
dadurch **gekennzeichnet**, daß dieses ferner eine Einrichtung (140) zum Einstellen der Komprimierung der Dichtung und der Stopfbuchsenpackung enthält.

17. Dosierventil nach Anspruch 16,
dadurch **gekennzeichnet**, daß die Einstelleinrichtung ein mit einem Schraubgewinde versehenes Glied (140) enthält, das wirksam mit dem Griff (86') in Eingriff steht und gegen die becherförmige Stopfbuchsenpackung (118') anschlägt, wodurch eine Drehung des Schraubgliedes (140) relativ zu dem Griff die Dichtung (116') axial komprimiert und radial ausdehnt.

FIG.1

FIG.2

FIG.3

FIG. 6

FIG. 4

FIG. 5